# DEMANDE DE BREVET EUROPEEN

(11) **EP 1 510 159 A1**
(43) Date de publication de la demande: **02.03.2005**
(21) Numéro de dépôt: 03019163.9
(22) Date de dépôt: 25.08.2003
(51) Int. Cl.: A47J 31/40, A47J 31/06, B65D 81/00

(54) **Procédé de préparation d'un produit alimentaire**

(71) Demandeur: NESTEC S.A., 1800 Vevey (CH)
(72) Inventeur: Denisart, Jean-Paul, 1093 La Conversion (CH); Caprotti, Patrick, 1072 Forel (Lavaux) (CH); Denisart, Jean-Luc, 1096 Cully (CH); Kollep, Alex, 1095 Lutry (CH); Hu, Ruguo, New Milford CT 06776 (US); Overbaugh, William F., Lakeside CT 06758 (US)
(74) Mandataire: Ravenel, Thierry Gérard Louis

(57) **Abrégé**

L'invention concerne un procédé pour la préparation d'une boisson par injection d'un liquide au travers d'une capsule (2) contenant une substance alimentaire soluble et/ou à extraire, dans lequel le liquide est injecté à partir d'au moins un point d'injection (42) de manière à créer dans ladite capsule un mouvement tourbillonnant du liquide injecté provoquant ainsi un brassage dudit liquide avec ladite substance.

## Description

La présente invention concerne un procédé de préparation d'une boisson à partir d'une substance contenue dans une enceinte, et mélangée à un liquide sous pression. Plus particulièrement, l'invention concerne un tel procédé dans lequel la substance est une poudre soluble contenue dans une enceinte telle qu'une capsule.

La présente invention concerne également un dispositif ainsi qu'une capsule comportant une buse d'injection intégrée permettant la mise en oeuvre du procédé de l'invention.

L'utilisation de capsules contenant une substance pour la préparation d'une boisson par extraction ou mélange sous pression est bien connue notamment dans le domaine des cafés de type expresso, des thés ou des chocolats, et s'avère intéressante en particulier pour des raisons d'hygiène, de fraîcheur, de conservation et de facilité d'utilisation.

Il existe différents types de machines permettant de préparer des boissons à partir de capsules fermées ou perméables contenant une substance à extraire telle que du café moulu ou du thé, ou une substance à dissoudre ou à disperser comme du café soluble, du chocolat, du lait ou un mélange ou une simple association de ces substances.

Le brevet CH 605 293 décrit une capsule fermée. Selon ce brevet, la capsule présente la forme d'un godet sensiblement tronconique muni d'une collerette sur laquelle est thermoscellée une membrane métallique. La membrane est garnie d'un filtre et la capsule renferme une certaine quantité d'une substance pour la confection d'une boisson, typiquement du café moulu. Lors de l'utilisation, la capsule est disposée dans un appareil dans lequel le fond du godet est perforé en son centre par un organe d'injection d'un liquide sous pression. Le liquide injecté à travers la substance déchire la membrane sous l'effet de la pression de sorte que la boisson peut s'écouler à travers un orifice d'écoulement prévu à cet effet sur l'appareil.

Un aspect important de ce procédé est que le flux de liquide doit passer à travers toute la masse de la substance contenue dans la capsule pour obtenir une extraction optimale et reproductible. Pour ce faire, l'organe d'injection se présente sous la forme d'une aiguille évidée en son centre et comportant au voisinage de son extrémité distale une pluralité de trous de sortie d'eau débouchant latéralement pour permettre au liquide sous pression de créer un piston de fluide pour mouiller autant que possible la totalité de la substance contenue dans la capsule, en l'occurrence du café torréfié et moulu.

A ce propos, il a été prévu dans le brevet EP 0 468 080 que les trous de sortie d'eau fassent un angle avec l'horizontale de manière que l'eau injectée se réfléchisse contre la face inférieure du fond avant d'atteindre le lit de café pour augmenter la dispersion de l'eau.

Il est donc bien connu que les conditions d'injection, de mélange et de mouillage influencent considérablement la qualité de la boisson produite. Selon que l'on considère une substance issue d'une mouture et compactée dans une capsule ou bien une substance à dissoudre ou à disperser dans un liquide telle qu'un café soluble ou une substance à base de lait telle qu'un cappuccino, chocolat ou autre, la façon dont l'eau circule au travers de la capsule a une influence sur les conditions d'extraction ou de mélange et donc sur la qualité finale de la boisson. Ainsi, un produit comme le café ou le chocolat doit se dissoudre ou se disperser rapidement et entièrement en produisant de préférence une mousse, alors qu'un thé soluble doit se dissoudre sans produire de mousse. La dissolution ou la dispersion doit être totale, homogène, rapide et sans formation de grumeaux ou de floculation. Pour les produits à extraire tels que le café moulu, les conditions optimales de mouillage sont différentes. Le produit doit être entièrement mouillé en optimisant la surface de contact eau/café, et sans que ne se créent de chemins privilégiés pour l'eau au travers du lit de café. En effet, la création d'un chemin privilégié au travers du lit de café peut conduire à une trop brusque montée en pression et ainsi une libération trop rapide de l'extrait, alors que le temps d'extraction est insuffisant et qu'une partie du café n'a pas encore été correctement mouillée.

Les procédés et les appareils de l'art antérieur sont bien adaptés à l'extraction de substances contenues dans une capsule telles que le café torréfié et moulu, mais sont mal adaptés aux capsules contenant des substances solubles telles qu'un café soluble ou une poudre chocolatée.

En effet, la disposition des moyens d'injection de liquide sous pression connus et les jets produits par ces moyens ne permettent notamment pas de réaliser le brassage nécessaire pour dissoudre de manière efficace la substance soluble dans le liquide, de sorte qu'une partie non négligeable de cette substance n'entre pas en contact avec le liquide et n'est pas dissoute. Il en résulte une reproductibilité des conditions de mélange insatisfaisante dans la mesure où la quantité de substance dissoute ne peut être contrôlée. Ceci conduit donc à la production de boissons n'ayant pas une concentration constante et plus généralement à une perte de la maîtrise de la qualité de la boisson.

Il ressort donc de ce qui précède qu'il existe un besoin pour un procédé et un dispositif pour la préparation d'une boisson notamment à partir d'une substance soluble contenue dans une enceinte.

La présente invention a donc pour but principal de satisfaire ce besoin en proposant un procédé pour la préparation d'une boisson à partir d'une substance soluble contenue dans une enceinte permettant une dissolution complète de la substance.

La présente invention a également pour but de fournir un procédé qui soit adapté aussi bien aux capsules contenant une substance à extraire, qu'aux capsules contenant des substances solubles.

La présente invention a aussi pour objet de s'appliquer à des dispositifs de préparation de boissons dit "ouverts", c'est à dire, dont l'enceinte de mélange et/ou d'extraction n'est pas, strictement parlant, une capsule, mais une chambre faisant partie du dispositif lui-même.

La présente invention a également pour but de fournir un procédé pour la préparation d'une boisson à partir d'une substance à extraire ou soluble contenue dans une enceinte qui soit simple et peu coûteux à mettre en oeuvre.

L'invention a également pour but de fournir un dispositif pour la préparation d'une boisson fonctionnant selon le procédé de l'invention.

L'invention a également pour but de fournir une capsule permettant de mettre en oeuvre le procédé selon l'invention.

A cet effet, l'invention a pour objet un procédé pour la préparation d'une boisson par injection d'un liquide au travers d'une enceinte contenant une substance alimentaire soluble et/ou à extraire, dans lequel le liquide est injecté à partir d'au moins un point d'injection de manière à créer dans ladite enceinte un mouvement tourbillonnant du liquide injecté, provoquant un brassage dudit liquide avec ladite substance.

Selon un mode de mise en oeuvre préféré du procédé selon l'invention, on injecte le liquide à distance du centre de l'enceinte, de sorte que la direction du jet de liquide passe à l'écart du centre et provoque un mouvement tourbillonnant autour dudit centre de l'enceinte. Le jet est en outre avantageusement incliné vers la paroi de fond de l'enceinte.

Cette manière de faire permet la production de turbulences au sein de l'enceinte qui assurent le brassage homogène de la substance contenue dans l'enceinte avec le liquide injecté, éliminant ainsi tout résidus de substance solide dans l'enceinte. En effet, le liquide injecté peut se propager plus facilement dans l'enceinte par réflexions multiples du jet tourbillonnant contre les parois de l'enceinte et ainsi atteindre la totalité de la substance de sorte que celle-ci devient rapidement mouillée. Ce procédé favorise donc la dissolution des substances dites "solubles" comme le café instantané ou "dispersables" comme le chocolat puisqu'il permet d'éliminer les zones d'accumulation en résidus solides qui ont tendance à se créer dans le fond de l'enceinte comme le long des arêtes internes ou des bords.

Ce procédé permet ainsi la préparation de boissons à partir, par exemple, de capsules identiques, ayant une concentration en substances extraites ou dissoutes qui varie très peu d'une capsule à l'autre.

Un autre avantage réside dans le fait que lors du brassage de la substance soluble avec le liquide injecté, de l'air est emprisonné dans le mélange, ce qui permet la production d'une boisson ayant un caractère mousseux.

Un autre avantage est que le procédé est simple et facile à mettre en oeuvre.

Ce procédé présente également l'avantage de pouvoir s'appliquer à une grande variété de produits alimentaires.

L'invention a également pour objet un dispositif pour préparer une boisson par injection d'un liquide au travers d'une capsule contenant une substance alimentaire à dissoudre ou à extraire, ce dispositif comprenant des moyens pour supporter la capsule et au moins un ensemble d'injection de liquide destiné à injecter le liquide sous la forme d'un jet à partir d'au moins un point d'injection à l'intérieur de la capsule, caractérisé en ce que le point d'injection et la direction dudit jet sont configurés de manière à créer dans ladite capsule un mouvement tourbillonnant qui provoque un brassage du liquide avec la substance.

L'invention a également pour objet une capsule contenant une substance alimentaire soluble et/ou à extraire pour la préparation d'une boisson par injection d'un liquide sous pression fourni par un appareil extérieur, cette capsule comportant une paroi supérieure et une paroi inférieure reliées ensemble par une paroi latérale pour définir une chambre dans laquelle ladite substance est contenue, ladite capsule étant caractérisée en ce que la paroi supérieure comprend un ensemble d'injection configuré pour injecter le liquide sous la forme d'un jet dans la chambre à partir d'au moins un point d'injection, le point d'injection et la direction dudit jet étant configurés de manière à créer dans ladite capsule un mouvement tourbillonnant qui provoque un brassage dudit liquide avec ladite substance.

Grâce à ces caractéristiques, la capsule permet une mise en oeuvre du procédé selon l'invention avec un appareil de type classique comprenant une buse de distribution de liquide simple.

Dans un mode de réalisation préféré de la capsule selon l'invention, la paroi supérieure comprend un élément de paroi extérieur et un élément de paroi intérieur délimitant ensemble une cavité étanche vis-à-vis de l'extérieur, agencée pour recevoir un élément de perforation et d'injection, et un canal reliant ladite cavité à l'ensemble d'injection.

Dans ce mode de réalisation, l'ensemble d'injection comprend de préférence une buse venant d'une seule pièce avec l'élément de paroi intérieur. La cavité et le canal sont avantageusement formés dans l'élément de paroi intérieur et l'élément de paroi extérieur est formé d'une membrane perforable. La cavité est disposée de préférence sensiblement au centre de la capsule.

D'autres caractéristiques et avantages de la présente invention apparaîtront dans la description suivante d'un mode de réalisation préféré du procédé et du dispositif selon l'invention, présentés à titre d'exemple non limitatif en référence aux dessins annexés, dans lesquels :
- la figure 1 est une vue schématique en coupe d'un premier mode de réalisation d'un dispositif pour la préparation d'une boisson par injection d'un liquide au travers d'une capsule selon l'invention, le dispositif de préparation étant représenté en position d'ouverture ;
- la figure 2 est une vue schématique en coupe du dispositif de préparation représenté à la figure 1, le dispositif de préparation étant représenté en position de fermeture ;
- la figure 3 est une vue schématique de dessus d'une capsule illustrant notamment la position du point d'injection du liquide dans celle-ci, l'opercule ayant été omis ;
- la figure 4 est une vue schématique en perspective d'un élément de perforation et d'injection équipant le dispositif de l'invention représenté à la figure 1 ;
- la figure 5 est une vue schématique en perspective d'une variante de réalisation du dispositif pour la préparation d'une boisson par injection d'un liquide au travers d'une capsule selon l'invention, le porte capsule ayant été omis ;
- la figure 6 est une vue schématique en coupe d'un deuxième mode de réalisation d'un dispositif pour la préparation d'une boisson par injection d'un liquide au travers d'une capsule selon l'invention, le dispositif de préparation étant représenté en position de fermeture et selon un premier mode d'utilisation ;
- la figure 7 est une vue schématique du dispositif de préparation représenté à la figure 6, le dispositif de préparation étant représenté en position de fermeture et selon un deuxième mode d'utilisation ;
- les figures 8a et 8b sont des vues schématiques respectivement en perspective et en perspective coupée de l'élément de perforation et d'injection utilisable en liaison avec le deuxième mode de réalisation du dispositif de préparation;
- les figures 9a et 9b sont des vues schématiques respectivement en perspective et en perspective coupée d'une variante de réalisation de l'élément de perforation et d'injection utilisable en liaison avec le deuxième mode de réalisation du dispositif de préparation ;
- la figure 10 est une vue schématique en coupe, en perspective et partiellement arrachée d'une capsule selon l'invention , et
- la figure 11 est une vue schématique en perspective d'un détail de la capsule représentée à la figure 10.

Dans la description qui suit, les éléments identiques sont désignés sur les figures par les mêmes références numériques.

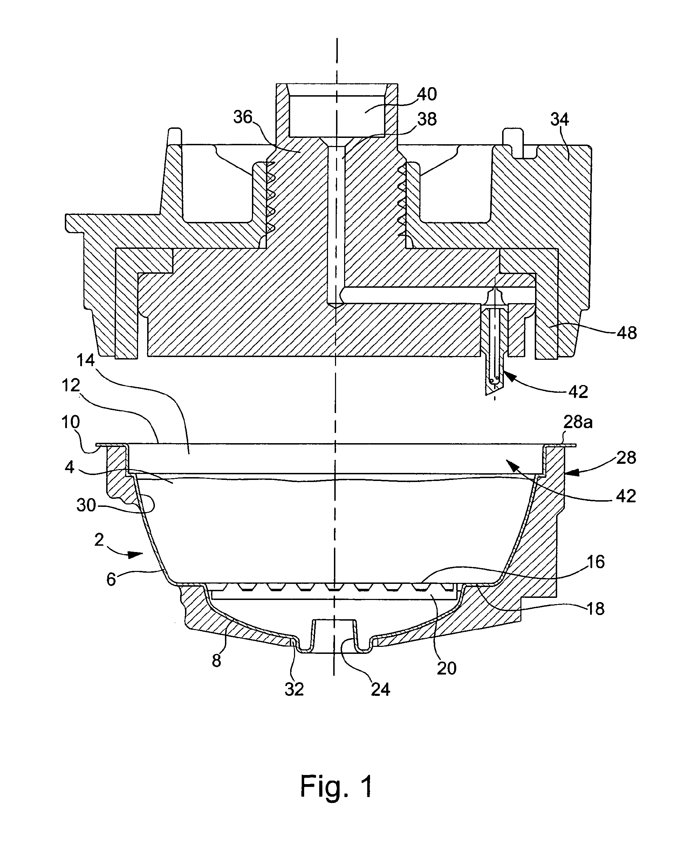

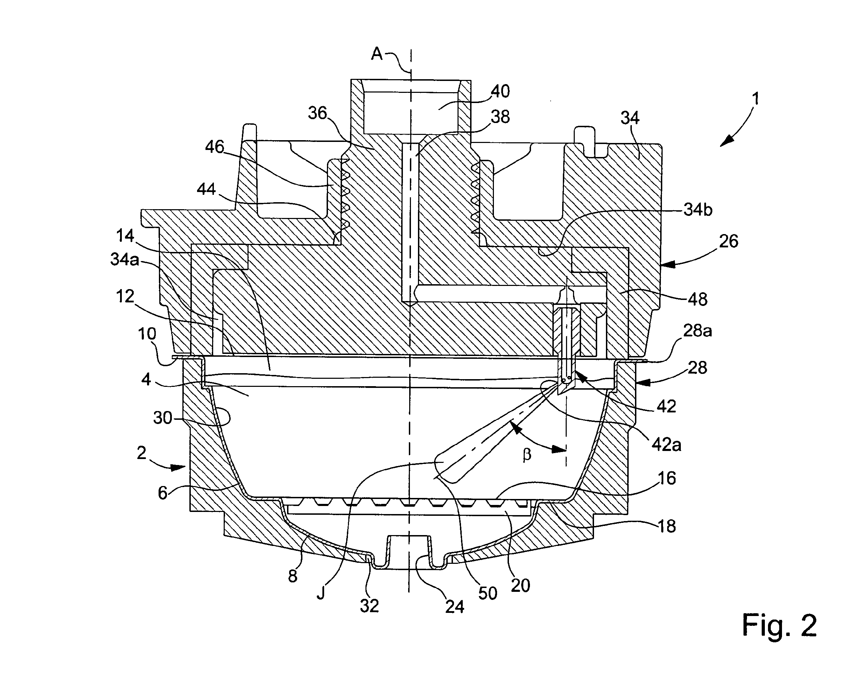

Les figures 1 et 2 montrent un dispositif pour la préparation d'une boisson désigné par la référence numérique générale 1, le dispositif étant représenté en position d'ouverture à la figure 1 et en position de fermeture, c'est à dire en position d'utilisation, à la figure 2. Dans le dispositif 1, la boisson est préparée par injection d'un liquide, typiquement de l'eau chaude ou froide sous pression, à travers une capsule 2 contenant une substance alimentaire 4 (non représentée) soluble et/ou à extraire telle que du café torréfié moulu, du thé, du café soluble, un mélange de café moulu et de café soluble, un produit chocolaté ou tout autre substance alimentaire déshydratée.

Comme cela est également visible à la figure 1, la capsule 2 présente la forme générale d'une coupelle comprenant une paroi latérale 6 et une paroi inférieure 8 définissant un fond. Dans l'exemple illustré, le diamètre du fond 8 est inférieur au diamètre de l'ouverture de la coupelle. L'extrémité libre de la paroi latérale 6 se termine par un rebord périphérique 10 sensiblement annulaire qui s'étend vers l'extérieur de la coupelle. A titre indicatif, la paroi latérale 6 et le fond 8 sont typiquement réalisés en un matériau plastique choisi parmi l'ensemble comprenant le EVOH, PVDC, PP, PE, PA en mono-couche ou multicouches. La coupelle est en outre fermée hermétiquement par une paroi supérieure 12 formée par un opercule scellé sur le rebord 10 par exemple par thermosoudage. L'opercule 12 est réalisé typiquement en un matériau capable d'être perforer par des moyens de perforation et d'injection du dispositif 1, lesquels seront décrits plus en détail ci-après. Le matériau de l'opercule 12 pourra être par exemple choisi parmi l'ensemble comprenant l'aluminium, un composite aluminium/ plastique, un composite carton/plastique, carton/aluminium/plastique, un plastique pur ou multi-couches. La paroi latérale 6, le fond 8 et l'opercule 12 forment ainsi ensemble une chambre 14 dans laquelle la substance alimentaire 4 est contenue. Il est bien entendu que la capsule 2 peut être également une capsule ouverte, ou partiellement ouverte. Plus généralement, le terme "capsule" s'entend au sens large comme tout type d'élément de recharge renfermant une substance sans limitation de forme ou de matériaux constitutifs de l'élément.

Dans l'exemple représenté, on notera que la capsule 2 comprend dans sa partie inférieure un film mince 16 scellé sur un rebord intérieur 18 de la coupelle et fermant la chambre 14 dans sa partie inférieure. Ce film mince 16 est disposé au dessus d'un disque 20 comportant une pluralité d'éléments en relief espacés régulièrement à la surface supérieure du disque 20 et formant une pluralité de canaux débouchant à la périphérie dudit disque dans une chambre de collecte 22 délimitée par le disque 20 et le fond 8, cette chambre de collecte 22 débouchant à son tour sur l'extérieur via un orifice d'écoulement 24. Le film mince 16 est destiné à se déchirer au contact des éléments en relief sous l'effet de la montée en pression à l'intérieur de la chambre 14. On notera que l'orifice d'écoulement est propre à la capsule 2, ce qui présente l'avantage de pouvoir délivrer un produit directement dans une tasse sans contact direct avec le dispositif et assure une absence de contamination croisée des boissons, une meilleure hygiène, moins de nettoyage et une plus grande simplicité dans la conception même du dispositif de préparation. Pour une description plus détaillée de la capsule 2, on se référera à la demande de brevet Euro PCT No 03/00384 déposée le 13 janvier 2003 au nom de la demanderesse et dont le contenu entier est incorporé ici par référence.

Le dispositif 1 comprend une tête d'injection de liquide 26 de forme générale cylindrique disposée au-dessus d'un porte-capsule 28 également de forme générale cylindrique. La tête d'injection 26 et le porte-capsule 28 sont mobiles verticalement l'un par rapport à l'autre entre la position d'ouverture (figure 1) dans laquelle la capsule 2 peut être mise en place dans le porte capsule 28, et la position de fermeture (figure 2) dans laquelle le dispositif 1 peut être activé.

Plus précisément , la capsule 2 est placée dans un logement 30 du porte-capsule qui présente typiquement une forme complémentaire à celle de la capsule qu'il est destiné à recevoir. Le logement 30 comprend dans sa partie inférieure une ouverture 32 placée en regard de l'orifice d'écoulement 24 de la capsule 2. Le porte-capsule forme ainsi des moyens de support de la capsule 2 dans le dispositif de préparation 1.

La tête d'injection 26 comprend un support 34 ayant la forme générale d'une cloche dans l'évidemment 34a duquel est fixé un noyau 36. Ce dernier comprend un canal d'amenée 38 d'un liquide qui s'étend entre un puits d'arrivée de liquide 40 et un élément de perforation et d'injection 42 présentant un orifice d'injection 42a. L'élément de perforation et d'injection qui sera décrit en détail ci-après est prévu pour traverser l'opercule 12 et amène l'orifice d'injection 42a à l'intérieur de la capsule lors du mouvement relatif de la tête d'injection 26 et du porte-capsule 28 qui amène le dispositif de préparation dans la position de fermeture.

Le puits 40 est destiné à être raccordé à un manchon d'alimentation en liquide d'un appareil (non représenté) capable de fournir du liquide chaud ou froid sous pression. La tête d'injection 26 forme ainsi un ensemble d'injection capable d'injecter un liquide sous la forme d'un jet J à partir d'au moins un point d'injection défini par l'orifice d'injection 42a de l'élément de perforation et d'injection 42.

Dans l'exemple illustré, l'évidement 34a présente une forme sensiblement cylindrique et son fond 34b comprend une ouverture centrale 44 prolongée axialement vers l'extérieur par une paroi définissant un manchon 46 fileté intérieurement.

Le noyau 36 présente une première portion cylindrique de grand diamètre s'étendant dans l'évidement 34a et une deuxième portion de plus petit diamètre vissée dans le manchon 46. La tête d'injection 26 comprend en outre un joint d'étanchéité annulaire 48 interposé entre la première portion du noyau 36 et la paroi latérale intérieure de l'évidement 34a. Ce joint d'étanchéité 48 est agencé pour s'appuyer, en position de fermeture (figure 2), contre le rebord 10 de la capsule qui repose à son tour sur une surface d'appui périphérique supérieure 28a du porte capsule 28. Le joint 48 fait également saillie axialement de l'évidement 34a pour permettre notamment d'être comprimé de façon appropriée lorsqu'il vient en contact avec le rebord 10 et ainsi assurer une bonne étanchéité . Dans l'exemple illustré, on voit que le joint 48 assure en outre l'étanchéité du canal d'amenée 38 dans la région de l'élément de perforation et d'injection 42.

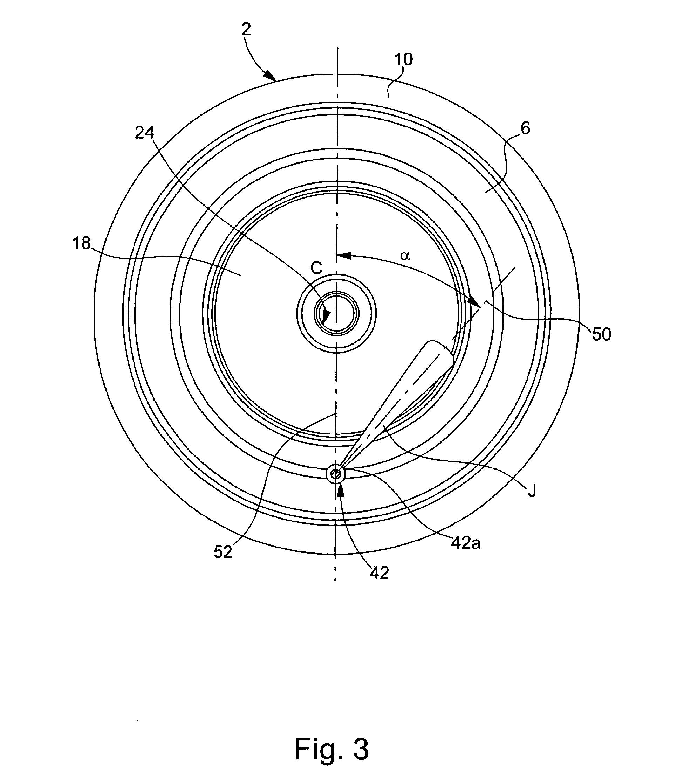

En se référant également à la figure 3 qui représente une vue de dessus de la capsule 2 dans laquelle l'opercule 12 a été omis et dans laquelle seul l'élément de perforation et d'injection 42 de la tête d'injection 26 a été représenté, on voit que l'élément de perforation et d'injection 42 et plus particulièrement son orifice d'injection 42a est disposé à distance du centre C de la capsule 2 et est donc excentré par rapport à l'axe vertical A-A de celle-ci. L'axe 50 de l'orifice d'injection 42a est orienté d'une part selon une première direction qui passe à l'écart du centre C (figure 3) de la capsule 2 et d'autre part selon une deuxième direction orientée vers le fond de celle-ci (figure 2). Par cette configuration de la position de l'orifice d'injection 42a dans la capsule et l'orientation particulière de l'axe 50 de cet orifice, on produit lors de l'injection d'un liquide un jet J qui crée dans la capsule un mouvement du liquide tourbillonnant autour du centre C de la capsule accompagné notamment de réflexions multiples du jet contre les parois intérieures de celle-ci. Le mouvement général tourbillonnant du liquide injecté accompagné de l'ensemble des réflexions de ce liquide permet d'obtenir un brassage efficace du liquide avec la substance 4 contenue dans la capsule et d'atteindre une dissolution ou un mouillage complet de cette substance.

Pour obtenir un brassage ou en d'autre termes pour créer un effet de vortex optimal dans la capsule 2, la demanderesse a constaté d'une part que l'axe 50 de l'orifice d'injection 42a doit former avec la ligne 52 qui relie le point d'injection au centre C de la capsule 2 un angle α compris entre 20° et 60° et de manière préférée compris entre 35° et 45° et que, d'autre part, que l'axe 50 doit former un angle β compris entre 50° et 70° et de manière préférée compris entre 55°et 65° avec l'axe vertical A-A de la capsule. Il a également été constaté qu'il est préférable de disposer l'orifice d'injection 42a au voisinage de la paroi latérale 6 de la capsule afin de pouvoir progressivement mouiller la substance depuis les bords de la capsule vers le centre de celle-ci et assurer que la totalité de la substance vienne en contact avec le liquide. A titre indicatif, le diamètre de l'orifice d'injection 42a est de l'ordre de 0,7 mm et le débit de liquide injecté est de l'ordre de 4 ml/s.

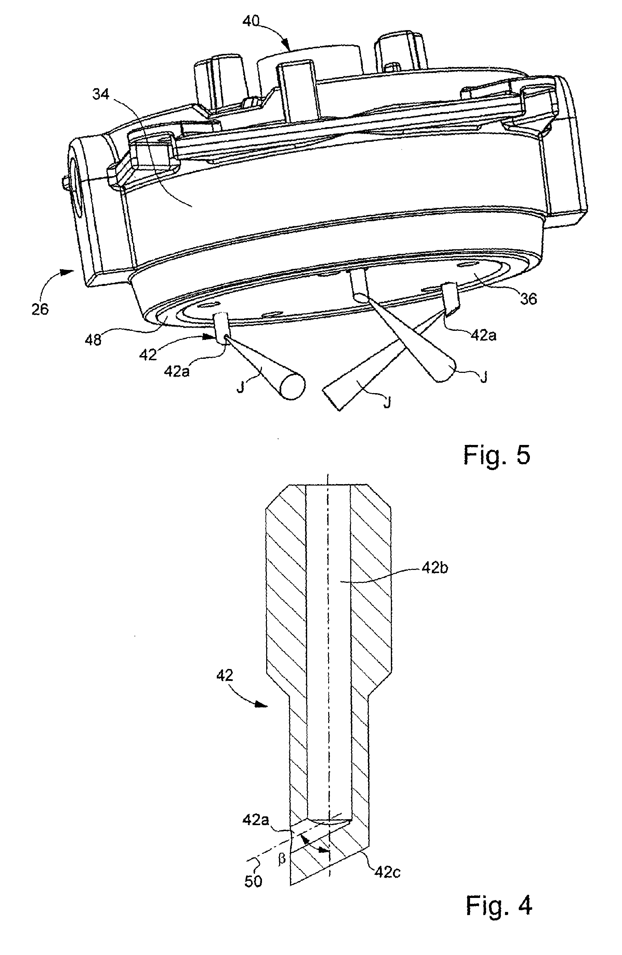

A la figure 4 on a représenté en coupe un exemple de réalisation de l'élément de perforation et d'injection 42 qui est destiné à traverser l'opercule 12 en le déchirant localement lorsque le dispositif de préparation est en position de fermeture. L'élément de perforation et d'injection 42 comprend une aiguille creuse comportant un canal 42b ouvert à ses deux extrémités. Une première extrémité communique avec le canal d'amenée 38 alors que la deuxième extrémité débouche vers l'extérieur par l'orifice d'injection 42a. Le canal 42b comporte une première portion rectiligne prolongée par une deuxième portion terminée par l'orifice d'injection 42a et formant un angle avec la première portion. L'inclinaison de la deuxième portion de canal est identique à l'angle selon lequel le liquide est injecté dans la capsule dans la mesure où la première portion est sensiblement parallèle à l'axe A-A lorsque l'aiguille est montée dans le noyau 36. On voit également à la figure 4 que l'aiguille creuse formant l'élément de perforation et d'injection 42 présente dans sa partie distale un biseau 42c et que l'orifice d'injection 42a débouche sur une face opposée au biseau 42c. Cette configuration particulière de la partie distale de l'aiguille permet avantageusement de repousser la portion d'opercule 12a déchirée vers le côté opposé à celui de l'orifice lors de la pénétration de l'aiguille 42 à travers l'opercule 12 si bien que l'orifice d'injection est toujours complètement dégagé et que la portion d'opercule 12a ne perturbe pas l'injection du liquide dans la capsule.

Selon une variante non représentée, l'élément de perforation et d'injection 42 peut aussi être entouré d'une garniture d'étanchéité visant à maintenir étanche la chambre vis-à-vis de l'extérieur en position d'utilisation du dispositif de préparation.

Bien entendu, l'orifice d'injection 42a est disposé de sorte que l'injection de liquide a lieu quelques millimètres en dessous de l'opercule 12, typiquement 4 mm.

A la figure 5 on a représenté une vue schématique en perspective d'une variante de réalisation du dispositif 1 pour la préparation d'une boisson par injection d'un liquide au travers d'une capsule selon l'invention dans laquelle seule la tête d'injection a été représentée. Selon cette variante, le porte-capsule est identique à celui qui à été décrit précédemment en liaison avec les figures 1 et 2 tandis que la tête d'injection 26 comprend non plus un seul élément de perforation et d'injection 42 mais une pluralité de ces derniers, en l'occurrence au nombre de 3, chacun d'eux ayant une structure identique et étant orientés de manière identique à l'élément de perforation et d'injection 42 décrit en liaison avec les figures 1 à 4. On voit notamment que les trois éléments de perforation et d'injection 42 sont répartis régulièrement sur une surface inférieure de la tête d'injection 26 destinée à coopérer avec l'opercule 12 de la capsule 2 en position d'utilisation du dispositif de préparation. Typiquement, ces éléments 42 sont répartis à 120° les uns des autres autour du centre de la tête d'injection 26. Dans ce cas, le canal d'amenée 38 est bien entendu configuré pour être en communication avec chacun des trois éléments de perforation et d'injection 42.

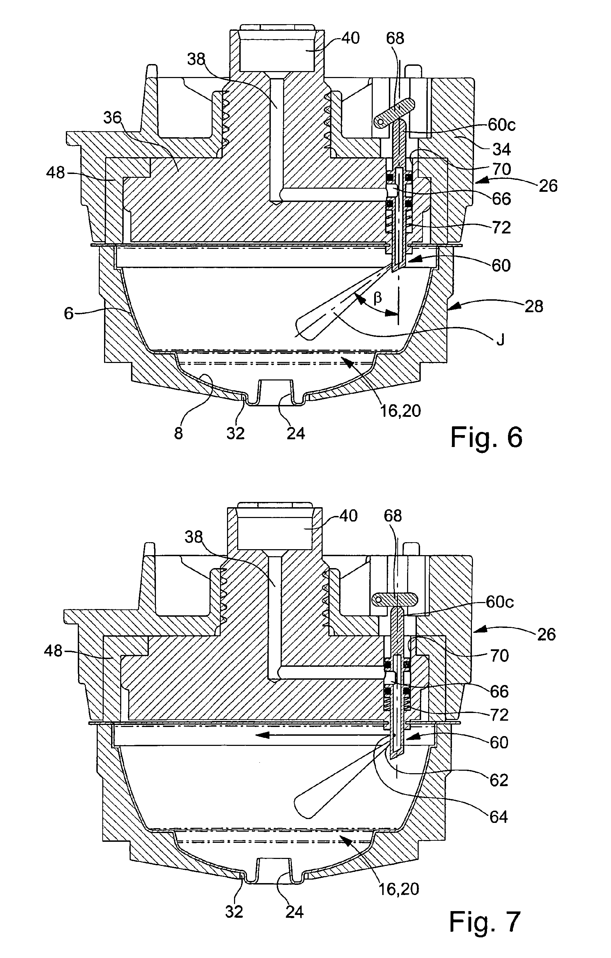

Aux figures 6 et 7 on a représenté un deuxième mode de réalisation d'un dispositif pour la préparation d'une boisson par injection d'un liquide au travers d'une capsule selon l'invention. Le dispositif de préparation est représenté en position de fermeture dans ces deux figures, mais selon un premier mode d'utilisation à la figure 6 et selon un deuxième mode d'utilisation à la figure 7. Par mode d'utilisation on entend dans le cadre de la présente invention le type de mouillage de la substance contenue dans la capsule 2 que l'on souhaite obtenir, le type de mouillage dépendant essentiellement de la nature de ladite substance.

A la figure 6, le dispositif de préparation est représenté dans un premier mode de mouillage dans lequel le liquide est injecté dans la capsule de manière à créer un mouvement tourbillonnant du liquide autour du centre C de la capsule accompagné notamment de réflexions multiples du jet contre les parois intérieures de celle-ci comme cela a été décrit ci-dessus en liaison avec les figures 1 et 2. Ce mode de mouillage convient particulièrement bien aux capsules contenant des substances solubles car elle permet une dissolution complète et rapide de ce type de substances.

A la figure 7, le dispositif de préparation est représenté dans un deuxième mode de mouillage dans lequel le liquide est injecté dans la capsule de manière à créer, en plus d'un mouvement tourbillonnant du liquide autour du centre C de la capsule, un mouillage dans la partie supérieure de la capsule à l'aide d'un jet divergent de liquide sous la forme d'une fine couche de liquide pour mouiller par le haut la substance contenu dans la capsule. Ce mode de mouillage convient particulièrement bien aux capsules contenant des substances à extraire car elle permet une dissolution complète et rapide de ce type de substances.

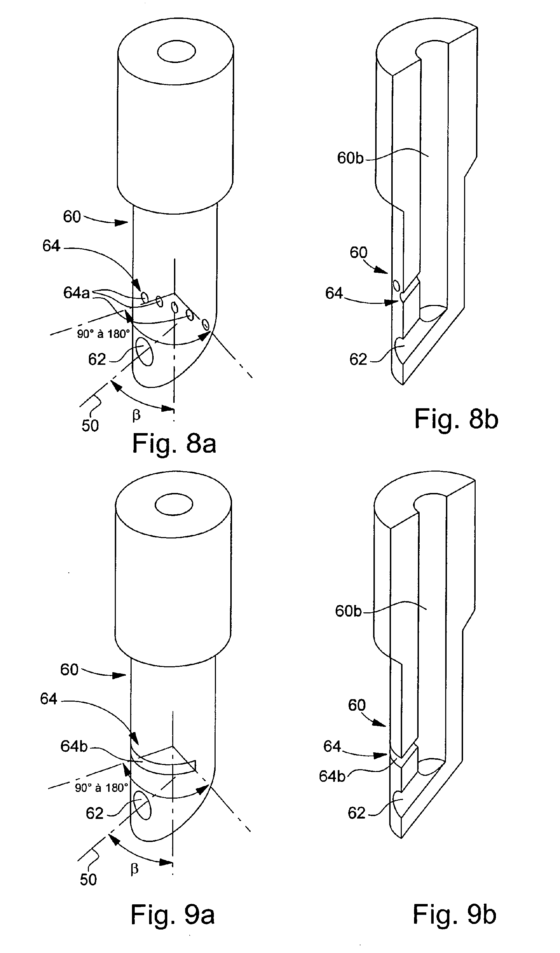

Selon ce deuxième mode de réalisation de l'invention, le dispositif de préparation comprend un élément de perforation et d'injection 60 comprenant un premier orifice d'injection 62 disposé et orienté de manière identique à l'orifice d'injection 42a de l'élément de perforation et d'injection 42 décrit en liaison avec les figures 1 à 4, et un deuxième moyen d'injection 64 dont l'axe d'injection s'étend sensiblement horizontalement pour produire le jet divergent sous la forme d'une fine couche de liquide. En se référant également aux figures 8a et 8b, on voit que dans l'exemple illustré l'élément de perforation et d'injection 60 se présente sous la forme d'une aiguille creuse comportant un canal 60b qui débouche vers l'extérieur à une première extrémité par l'intermédiaire des premier 62 et deuxième 64 moyens d'injection. Le canal 60b communique également avec le canal d'amenée 38 dans sa partie médiane par une ouverture 66. L'élément de perforation et d'injection est prolongé à l'extrémité opposée aux moyens d'injection 62 et 64 par un doigt d'actionnement 60c coopérant avec un levier 68 commandé par des moyens de commutation (non représentés) solidaires de la tête 26. L'élément de perforation et d'injection 62 comprend dans sa partie médiane une portion de plus grand diamètre dans laquelle est ménagée l'ouverture 66 et par laquelle il est monté mobile en translation dans un passage 70 épaulé s'étendant parallèlement à l'axe vertical de la tête d'injection ménagée dans le noyau 36, un ressort de rappel 72 étant interposé entre le fond du passage et un épaulement de l'élément de perforation et d'injection 62. Deux joints O-ring sont placés de part et d'autre de l'ouverture 66 sur l'élément de perforation et d'injection 60 pour coopérer avec la surface intérieure du passage 70.

Dans ce mode de réalisation, l'élément de perforation 60 est mobile entre deux positions distinctes, à savoir une première position (figure 6) dans laquelle seul le premier orifice 62 débouche à l'intérieur de la capsule 2 et qui correspond au premier mode de mouillage et une deuxième position (figure 7) dans laquelle le premier orifice 62 ainsi que le deuxième moyen d'injection 64 débouchent à l'intérieur de la capsule 2 et qui correspond au deuxième mode de mouillage. Le passage du premier mode de mouillage au deuxième mode de mouillage est réalisé via les moyens de commutation qui agissent sur l'élément de perforation et d'injection 60 à l'encontre du ressort de rappel 72 par l'intermédiaire du levier 68. Il est bien entendu que le diamètre du canal d'amenée 38 et de l'ouverture 66 ainsi que la course de l'élément de perforation et d'injection pour le passage du premier au deuxième mode de mouillage 60 sont agencés pour que l'ouverture 66 communique en tout temps au moins partiellement avec le canal d'amenée 38 quel que soit le mode de mouillage sélectionné.

De préférence, et comme cela ressort des figures 8a et 8b, le deuxième moyen d'injection 64 permettant de produire un jet divergent sous la forme d'une fine couche de liquide comprend une pluralité d'orifices 64a répartis sur une partie du pourtour de l'élément de perforation et d'injection 60. L'élément de perforation et d'injection 60 étant disposé de manière excentrée à l'intérieur de la capsule, et plus précisément au voisinage de la paroi latérale de celle-ci, les orifices 64a sont dirigés vers le centre de la capsule. Pour des raisons liées à la fabrication de l'élément 60, les orifices 64a sont avantageusement décalés en hauteur les uns par rapport aux autres. Ces orifices 64a produisent ainsi une pluralité de jets divergents qui se recouvrent pour former une fine couche de liquide qui arrose et mouille la substance contenue dans la partie supérieure la capsule.

Bien entendu, on peut aussi envisager de former la fine couche de liquide à partir d'un seul orifice 64b ayant la forme d'une fente s'étendant transversalement à la direction longitudinale de l'élément 60 comme cela est représenté aux figures 9a et 9b. Dans ce cas, le jet divergent s'étend sur un secteur circulaire suffisamment large pour mouiller sensiblement la totalité de la substance se trouvant dans la partie supérieure de la capsule.

On notera que les orifices 64a et l'orifice 64b sont respectivement agencés pour que la fine couche de liquide soit produite de manière sensiblement continue sur un secteur angulaire compris entre 90° et 180° et de préférence de l'ordre de 160°. En outre, ces orifices 64a et 64b sont agencés pour produire une couche de liquide ayant une épaisseur inférieure ou égale à 0,5mm et de préférence inférieure à 0,3mm. A cet effet, pour chacun des orifices 64a on choisira de préférence un diamètre de l'ordre de 0,5 mm et pour l'orifice 64b on choisira un diamètre de l'ordre de 0,7 mm.

Selon une variante avantageuse de ce deuxième mode de réalisation, l'axe des deuxièmes moyens d'injection 64, c'est-à-dire l'axe des orifices 64a respectivement 64b définissant la direction du jet de liquide, fait un angle compris entre 0° et 25° avec l'horizontale et de préférence un angle de l'ordre 15°. Le liquide injecté par ces orifices est ainsi dirigé vers le haut et se réfléchit dans un premier temps contre la surface inférieure de l'opercule 12 et est renvoyé dans un second temps vers le lit de substance en étant beaucoup plus dispersé. Ce faisant, l'homogénéité du mouillage de la substance est améliorée.

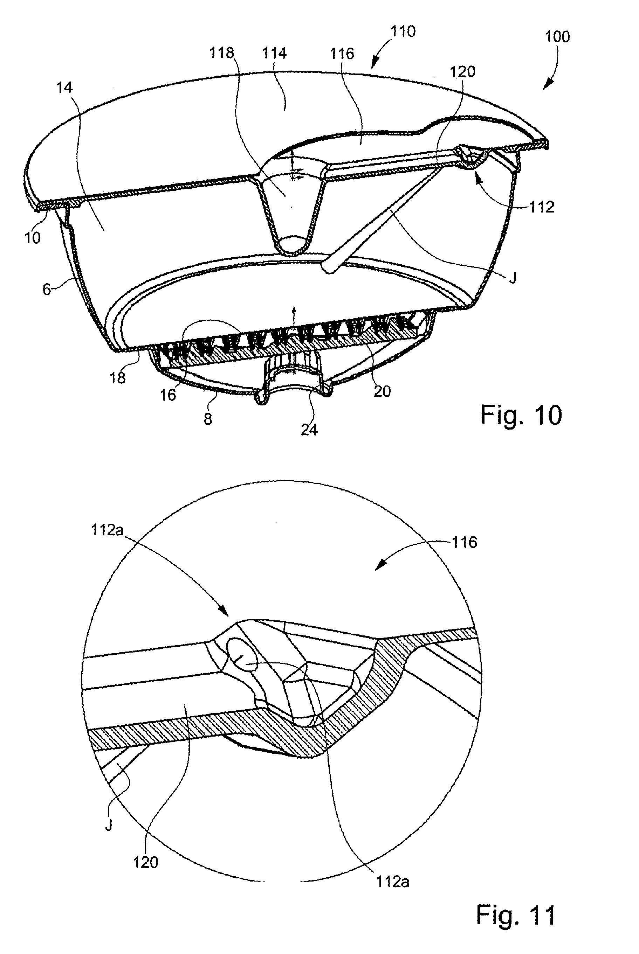

A la figure 10 on a représenté une capsule 100 contenant une substance alimentaire 4 soluble et/ou à extraire pour la préparation d'une boisson par injection d'un liquide sous pression et qui peut mettre en oeuvre le procédé de l'invention avec un appareil de type classique comprenant une buse de distribution de liquide simple. Pour ce faire, la capsule 100 se distingue de la capsule 2 décrit en liaison avec les figures 1 et 2 en ce que la paroi supérieure 110 comprend un ensemble d'injection 112 configuré pour injecter du liquide dans la chambre 14 à partir d'un point d'injection sous la forme d'un jet J, le point d'injection et la direction dudit jet J étant configurés de manière à créer dans ladite capsule un mouvement tourbillonnant qui provoque un brassage dudit liquide avec ladite substance.

Plus précisément, la paroi supérieure 110 comprend un élément de paroi extérieur 114 et un élément de paroi intérieur 116 qui délimitent ensemble une cavité 118 étanche vis-à-vis de l'extérieur ainsi qu'un canal 120 qui relie la cavité 118 à l'ensemble d'injection 112

L'élément de paroi extérieur 114 est réalisé sous la forme d'un opercule comportant au moins une région réalisée en un matériau capable d'être perforé par un élément de perforation et d'injection (non représenté) telle qu'une buse d'injection d'un appareil classique pour la préparation de boisson. Dans l'exemple illustré, l'élément de paroi extérieur 114 est réalisée par un opercule thermosoudé sur le bord de la capsule, la structure de cet opercule étant identique à celle de l'opercule 12 décrit en liaison avec les figures 1 et 2.

Dans ce mode réalisation, la cavité 118 et le canal 120 sont réalisés directement par des renfoncements de profondeurs distinctes dans l'élément de paroi intérieur 116, la cavité 118 étant réalisée sensiblement au centre de la capsule. Comme la cavité 118 est destinée à recevoir l'élément de perforation et d'injection d'un appareil classique, il est bien entendu que sa disposition et sa profondeur pourront varier en fonction de l'appareil avec lequel elle sera utilisée.

L'élément de paroi intérieur 116 comprend en outre l'ensemble d'injection 112 qui est formé une buse d'injection 112a. De manière préférée et comme illustré, la buse d'injection 112a est solidaire de l'élément de paroi intérieure 116 et vient d'une seule pièce avec cette dernière. La buse d'injection 112a comprend un orifice d'injection 112b disposé et orienté de manière identique à l'orifice d'injection 42a de l'élément de perforation et d'injection 42 décrit en liaison avec les figures 1 à 4.

Selon une variante de réalisation non représentée de la capsule selon l'invention, la buse d'injection peut comprendre également des deuxième moyens d'injections dont l'axe d'injection s'étend sensiblement horizontalement pour produire un deuxième jet divergent sous forme d'une fine couche de liquide. Ces deuxièmes moyens d'injection pourraient typiquement être formés d'une pluralité de orifices ou d'une fente comme cela à été décrit précédemment en liaison avec les figures 8a et 9a.

Il va maintenant être décrit le procédé selon l'invention pour la préparation d'une boisson par injection d'un liquide au travers d'une capsule contenant une substance alimentaire soluble en liaison avec le premier mode de réalisation du dispositif selon l'invention illustré aux figures 1 et 2 . On dispose tout d'abord la capsule 2 dans le porte capsule 28 alors que le dispositif est en position ouverte (figure1). On ferme ensuite le dispositif par un mouvement relatif vertical du porte capsule 28 et de la tête d'injection 26 (figure 2). Ce faisant, le rebord 10 de la capsule est pincé entre la surface annulaire inférieure du joint d'étanchéité 48 et la surface périphérique supérieure d'appui 28a du porte capsule. L'opercule 12 est alors simultanément perforé par l'élément de perforation et d'injection 42. Dans cette configuration l'orifice d'injection 42 a est disposé dans la capsule 2, de préférence à quelques millimètres en dessous de l'opercule. Le liquide pour la confection de la boisson, par exemple de l'eau chaude, est alors injecté sous pression dans la capsule à travers l'orifice 42a selon une orientation qui provoque dans un premier temps une dissolution progressive de la substance à dissoudre selon une direction qui passe à l'écart dudit centre et qui est en outre inclinée vers une paroi de la capsule creusant ainsi un tunnel jusqu'à ladite paroi de la capsule 2. Une fois cette paroi atteinte et compte tenu de l'orientation du jet et de son énergie cinétique, le jet est dévié et continue de dissoudre la substance selon une autre direction jusqu'à être à nouveau dévié contre une autre paroi provoquant ainsi un mouvement tourbillonnant du liquide injecté au tour du centre de la capsule. Ce mouvement tourbillonnant provoque donc un brassage liquide avec ladite substance et permet une dissolution efficace de la substance. Simultanément, la pression à l'intérieur de la capsule augmente lentement et dilate progressivement la membrane autour des éléments en relief du disque 20 dans l'exemple illustré aux figures 1 et 2. Une fois que la tension de rupture de la membrane 16 est atteinte sous l'effet de la pression, la membrane se déchire et le liquide dissout peut s'évacuer au travers de l'orifice d'écoulement 24 de la capsule 2. Le jet tourbillonnant continue ensuite ses réflexions multiples pour atteindre la masse de substance restante jusqu'à dissolution complète de celle-ci.

Dans le cas de la préparation d'une boisson par injection d'un liquide au travers d'une capsule contenant une substance alimentaire à extraire en liaison avec le deuxième mode de réalisation du dispositif selon l'invention illustré aux figures 6 et 7 le procédé selon l'invention se distingue de celui décrit ci-dessus en ce que le dispositif est initialement commuté dans le mode de mouillage correspondant à la substance contenue dans la capsule en l'occurrence dans le deuxième mode de mouillage illustré à la figure 7. Dans ce mode de mouillage, on effectue une injection additionnelle de liquide dans la partie supérieure de la capsule sous la forme d'une ou plusieurs fines couches de liquide pour mouiller par le haut ladite substance à partir des moyens d'injection 64. La demanderesse à constaté que le mouillage de la substance par la combinaison du jet J et de la fine couche de liquide est particulièrement efficace notamment pour la préparation de boisson à partir de substance à extraire.

On notera que avec la capsule 100 représentée à la figure 10, un appareil muni d'un élément de perforation et d'injection classique peut être utilisé pour mettre en oeuvre le procédé de préparation selon l'invention. En effet il suffit que la position la cavité 118 soit prévue pour être alignée avec l'élément de perforation et d'injection de l'appareil lorsque la capsule 100 est disposée dans l'appareil pour qu'au moment de la perforation de l'opercule 110, l'élément de perforation et d'injection pénètre dans la cavité 118. A ce moment, le liquide injecté remplit la cavité et puis est canalisé par le canal 120 jusqu'à l'orifice d'injection 112a où il est injecté sous pression dans la capsule en provoquant les phénomènes décrits ci-dessus.

De manière préférée la vitesse d'injection du liquide dans la capsule est comprise entre 1,5 et 5 m/s dans les modes de réalisation décrits ci-dessus.

L'invention n'est bien entendu pas limitée aux modes de réalisation décrits ci-dessus et on comprendra que diverses modifications et/ou améliorations évidentes pour l'homme de métier pourront y être apportées sans sortir du cadre de l'invention défini par les revendication annexées. En particulier, à titre de variante, on pourra envisager de réaliser la perforation non plus à travers l'opercule 12, mais à travers d'autres parois de la capsule, par exemple à travers les parois latérales dès lors que l'élément de perforation est disposé et orienté pour que le jet de liquide injecté entraîne un mouvement tourbillonnant autour du centre C de la capsule et permette un brassage du liquide avec la substance contenue dans la capsule. Par exemple, l'élément de perforation et d'injection pourrait traverser la paroi latérale ou encore la paroi de fond de la capsule.

### Abréviations

- EVOH :: Copolymère d'éthylène et d'alcool de vinyle
- PVDC :: Polychlorure de vinyldiène
- PP :: Polypropylène
- PE :: Polyéthylène
- PA :: Polyamide

## Revendications

1. Procédé pour la préparation d'une boisson par injection d'un liquide dans une enceinte contenant une substance alimentaire soluble et/ou à extraire, dans lequel le liquide est injecté à partir d'au moins un point d'injection de manière à créer dans ladite enceinte un mouvement tourbillonnant du liquide injecté, provoquant ainsi un brassage dudit liquide avec ladite substance.

2. Procédé selon la revendication 1, dans lequel l'enceinte comporte un centre et dans lequel le liquide est injecté à distance du centre de l'enceinte, le liquide injecté ayant la forme d'un jet dont la direction passe à l'écart dudit centre de sorte que l'on obtient un mouvement tourbillonnant autour du centre de l'enceinte.

3. Procédé selon la revendication 2, dans lequel ladite enceinte présente un axe sensiblement vertical et dans lequel ledit jet est en outre incliné vers le bas.

4. Procédé selon l'une des revendications 2 ou 3, dans lequel la direction du jet à partir dudit point d'injection forme un angle compris entre 20° et 60° et de préférence entre 35° et 45° avec une ligne reliant le point d'injection au centre de l'enceinte.

5. Procédé selon la revendications 3, dans lequel la direction du jet forme un angle compris entre 50° et 70° et de préférence entre 55° et 65° avec l'axe vertical de l'enceinte.

6. Procédé selon l'une quelconque des revendications 2 à 5, dans lequel le liquide est injecté à partir d'une pluralité de points d'injection répartis régulièrement dans l'enceinte.

7. Procédé selon l'une quelconque des revendications précédentes, **caractérisé en ce que** l'enceinte est une capsule.

8. Procédé selon la revendication 7, dans lequel la capsule comporte une paroi supérieure et une paroi inférieure reliées ensemble par une paroi latérale, et dans lequel l'injection du liquide est réalisée au voisinage de la paroi latérale de la capsule.

9. Procédé selon la revendication 8, dans lequel l'injection est réalisée à travers la paroi supérieure de la capsule.

10. Procédé selon la revendication 9, dans lequel le point d'injection est disposé à une distance de l'ordre de 4 mm de ladite paroi supérieure.

11. Procédé selon l'une quelconque des revendications 7 à 10, dans lequel on effectue sélectivement une injection additionnelle du liquide dans la partie supérieure de la capsule sous la forme d'une ou plusieurs fines couches de liquide pour mouiller par le haut ladite substance alimentaire contenue dans la capsule.

12. Procédé selon l'une quelconque des revendications 1 à 6, dans lequel l'enceinte est un bol de mélange faisant partie d'un dispositif de préparation de boisson.

13. Dispositif pour préparer une boisson par injection d'un liquide au travers d'une capsule contenant une substance alimentaire à dissoudre ou à extraire, ce dispositif comprenant des moyens pour supporter ladite capsule et au moins un ensemble d'injection de liquide destiné à injecter le liquide à partir d'au moins un point d'injection à l'intérieur de la capsule sous la forme d'un jet, **caractérisé en ce que** le point d'injection et la direction dudit jet sont configurés de manière à créer dans ladite capsule un mouvement tourbillonnant qui provoque un brassage dudit liquide avec ladite substance.

14. Dispositif selon la revendication 13, dans lequel la capsule comporte un centre et dans lequel l'ensemble d'injection comprend au moins un élément de perforation et d'injection ayant un premier orifice d'injection, **caractérisé en ce que** ledit premier orifice d'injection est arrangé à distance du centre de la capsule et **en ce que** l'axe dudit premier orifice d'injection s'étend selon une direction qui passe à l'écart dudit centre.

15. Dispositif selon la revendication 14, **caractérisé en ce que** l'axe dudit premier orifice d'injection à partir dudit point d'injection forme un angle compris entre 20° et 60° et de préférence entre 35° et 45° avec une ligne reliant le point d'injection au centre de la capsule.

16. Dispositif selon la revendication 13 ou 14, dans lequel ladite capsule présente un axe sensiblement vertical, **caractérisé en ce que** l'axe dudit premier orifice d'injection s'étend en outre vers la bas.

17. Dispositif selon l'une de revendication 14 à 16, **caractérisé en ce que** l'axe dudit premier orifice d'injection forme un angle compris entre 50° et 70° et de préférence entre 55° et 65° avec l'axe vertical de la capsule.

18. Dispositif selon l'une des revendications 13 à 17, **caractérisé en ce qu'**il comprend une pluralité d'éléments de perforation et d'injection répartis régulièrement dans ladite capsule.

19. Dispositif selon l'une des revendications 13 à 18, **caractérisé en ce que** ledit élément de perforation et d'injection est choisi parmi l'ensemble comprenant une pointe, une lame, un couteau, une aiguille ou analogue.

20. Dispositif selon la revendication 19, **caractérisé en que** ledit élément de perforation et d'injection est une aiguille présentant un biseau dans une partie distale et en ce que ledit point d'injection est opposé audit biseau.

21. Dispositif selon la revendication 19 ou 20, **caractérisé en ce que** ledit élément de perforation et d'injection comprend en outre au moins un deuxième orifice d'injection dont l'axe s'étend sensiblement horizontalement pour produire un deuxième jet divergent sous forme d'une fine couche de liquide.

22. Dispositif selon la revendication 19 ou 20, **caractérisé en ce que** ledit élément de perforation et d'injection comprend une pluralité de deuxième orifices répartis sur le pourtour dudit élément de perforation pour produire une pluralité de jets se recouvrant pour former une fine couche de liquide.

23. Dispositif selon la revendication 21 ou 22, **caractérisé en ce que** l'axe du ou des deuxième(s) orifice(s) d'injection fait un angle compris entre 0° et 25° avec l'horizontale, **en ce que** ladite fine couche de liquide s'étend de manière sensiblement continue sur un secteur angulaire d'environ 160° et **en ce que** la fine couche de liquide présente une épaisseur inférieure ou égale à 0,5 mm.

24. Dispositif selon l'une des revendications 21 à 23, **caractérisé en ce qu'**il comprend en outre des moyens permettant, en réponse à des moyens de commande, d'obturer le ou les deuxième(s) orifice(s) d'injection pour commuter le dispositif dans au moins deux modes différents de mouillage de la substance.

25. Capsule contenant une substance alimentaire soluble et/ou à extraire pour la préparation d'une boisson par injection d'un liquide sous pression, comportant une paroi supérieure et une paroi inférieure reliées ensemble par une paroi latérale pour définir une chambre dans laquelle ladite substance est contenue, **caractérisée en ce que** la paroi supérieure comprend un ensemble d'injection configuré pour injecter ledit liquide dans la chambre à partir d'au moins un point d'injection sous la forme d'un jet, le point d'injection et la direction dudit jet étant configurés de manière à créer dans ladite capsule un mouvement tourbillonnant qui provoque un brassage dudit liquide avec ladite substance.

26. Capsule selon la revendication 25, **caractérisée en ce que** la paroi supérieure comprend un élément de paroi extérieur et un élément de paroi intérieur délimitant ensemble une cavité étanche vis-à-vis de l'extérieur, agencée pour recevoir un élément de perforation et d'injection, et un canal reliant ladite cavité audit ensemble d'injection.

27. Capsule selon la revendication 25, **caractérisée en ce que** l'ensemble d'injection comprend une buse venant d'une seule pièce avec ledit élément de paroi intérieur.

28. Capsule selon la revendication 25, **caractérisée en ce que** la cavité et le canal sont formés dans ledit élément de paroi intérieur.

29. Capsule selon l'une des revendications 25 à 28, **caractérisée en ce que** l'élément de paroi extérieur est formé d'une membrane perforable.

30. Capsule selon l'une des revendications 27 à 29, dans lequel ladite buse comprend un premier orifice d'injection, **caractérisée en ce que** l'orifice d'injection est arrangé à distance du centre de la capsule et **en ce que** l'axe dudit premier orifice d'injection s'étend selon une direction qui passe à l'écart dudit centre.

31. Capsule selon l'une des revendications 25 à 30, dans lequel ladite capsule présente un axe sensiblement vertical, **caractérisée en ce que** l'axe dudit premier orifice d'injection s'étend en outre vers le bas.

32. Capsule selon la revendication 27, **caractérisée en ce que** ladite buse comprend en outre au moins un deuxième orifice d'injection dont l'axe s'étend sensiblement horizontalement pour produire un deuxième jet divergent sous forme d'une fine couche de liquide.

33. Capsule selon la revendication 27, **caractérisée en ce que** ladite buse comprend une pluralité de deuxièmes orifices répartis sur son pourtour pour produire une pluralité de jets se recouvrant pour former une fine couche de liquide.
